# EUROPÄISCHE PATENTSCHRIFT

(11) **EP 2 751 529 B1**
(45) Veröffentlichungstag und Bekanntmachung des Hinweises auf die Patenterteilung: **21.03.2018**
(21) Anmeldenummer: 12740324.4
(22) Anmeldetag: 05.07.2012
(51) Int. Cl.: G01D 21/00

(54) **SENSORANORDNUNG FÜR EIN FAHRZEUG UND BETRIEBSVERFAHREN FÜR EINE SENSORANORDNUNG IN EINEM FAHRZEUG**
SENSOR ARRANGEMENT FOR A VEHICLE AND AN OPERATING METHOD FOR A SENSOR ARRANGEMENT IN A VEHICLE
SYSTÈME DE DÉTECTION POUR UN VÉHICULE ET PROCÉDÉ D'UTILISATION D'UN SYSTÈME DE DÉTECTION DANS UN VÉHICULE

(30) Priorität: 01.09.2011 DE 102011081947
(43) Veröffentlichungstag der Anmeldung: 09.07.2014
(73) Patentinhaber: Robert Bosch GmbH, 70442 Stuttgart (DE)
(72) Erfinder: WEISS, Timo, 71701 Schwieberdingen (DE)
(86) Internationale Anmeldenummer: PCT/EP2012/063086
(87) Internationale Veröffentlichungsnummer: WO 2013/029843

(56) Entgegenhaltungen:
- EP-A1- 1 098 174
- WO-A2-02/06852
- DE-A1- 3 446 248
- US-A1- 2009 299 675

## Beschreibung

### Stand der Technik

Die Erfindung geht aus von einer Sensoranordnung für ein Fahrzeug nach der Gattung des unabhängigen Patentanspruchs 1 und von einem Betriebsverfahren für eine Sensoranordnung in einem Fahrzeug nach der Gattung des unabhängigen Patentanspruchs 7.

Periphere Sensoreinheiten in Insassenschutzsystemen nutzen meist Stromschnittstellen (z.B. PAS4-IF, PSI5 etc.) zur Übertragung von Sensordaten an eine Auswerte- und Steuereinheit, wie beispielsweise einem zentralen Steuergerät. Bei Stromschnittstellen der neusten Generation (z.B. PSI5 v1.3, Pegasus etc.) erfolgt die Datenübertragung in einer zum Takt der Auswerte- und Steuereinheit synchronen Art und Weise.

Dabei wird von der Auswerte- und Steuereinheit ein Arbeitstaktsignal erzeugt, welches den peripheren Sensoreinheiten zugeführt wird, um den Beginn eines neuen Datenrahmens zu signalisieren. Die Kommunikation von der Sensoreinheit in Richtung Auswerte- und Steuereinheit erfolgt dann durch Modulation des aufgenommenen Stroms. Die Modulationsamplitude des Datensignals ist hierbei fest vorgegeben.

In der Offenlegungsschrift DE 10 2009 046 450 A1 werden eine Sensoranordnung mit mindestens einem Sensor und einer Auswerteeinheit sowie ein Verfahren zum Betreiben einer Sensoranordnung beschrieben. Der beschriebenen Auswerteeinheit wird ein die Messgröße repräsentierendes Sensorsignal des mindestens einen Sensors zugeführt. Hierbei ist ein Modulator vorgesehen, mittels welchem das Sensorsignal des Sensors während des Messens mit einem vom Sensorsignal unabhängigen periodischen Testsignal moduliert ist.

### Offenbarung der Erfindung

Die erfindungsgemäße Sensoranordnung für ein Fahrzeug mit den Merkmalen des unabhängigen Patentanspruchs 1 und das Betriebsverfahren für eine Sensoranordnung in einem Fahrzeug mit den Merkmalen des unabhängigen Patentanspruchs 7 haben demgegenüber den Vorteil, dass die Modulationsamplitude an die aktuellen Übertragungseigenschaften wie Fehlerrate, Störabstand, Störleistung usw. im Frequenzband der Kommunikation angepasst werden kann. Dadurch kann beispielsweise die Modulationsamplitude reduziert werden, um die Störabstrahlung der mindestens einen Sensoreinheit auf ein minimal notwendiges Maß zu reduzieren, falls eine mehr als ausreichende Signalgüte des empfangenen Sensorsignals vorliegt. Zudem kann der Stromverbrauch in der Auswerte- und Steuereinheit reduziert werden.

Ausführungsformen der vorliegenden Erfindung bilden vorzugsweise einen Regelkreis, dessen Stellgröße die Modulationsamplitude der mindestens einen Sensoreinheit ist. Als Sollgröße wird eine ausreichende Signalgüte des über eine Kommunikationsverbindung übertragenen Sensorsignals vorgegeben. Wenn die Ist-Größe der aktuellen Signalgüte geringer als die vorgegebene Soll-Größe der Signalgüte ist, dann wird die Modulationsamplitude erhöht, wenn die Ist-Größe höher als die Soll-Größe ist, dann wird die Modulationsamplitude reduziert. Der Wert für die einzustellende Modulationsamplitude kann beispielsweise in der Sendereinheit der Auswerte- und Steuereinheit ermittelt und dann über eine entsprechende Modulation des Synchronisationssignals an die mindestens eine Sensoreinheit übertragen werden. Alternativ kann eine Empfängereinheit in der mindestens einen Sensoreinheit aus einem empfangenden Fehlerdifferenzsignal, welches eine Regelabweichung zwischen der Ist-Größe und der Soll-Größe der Signalgüte des Sensorsignals repräsentiert, die korrespondierende Modulationsamplitude bestimmen und entsprechend einstellen. Vorzugweise können die Regelkreise als PID (Proportional-Integral-Derivative) Regelkreise ausgelegt werden.

Ausführungsformen der vorliegenden Erfindung stellen eine Sensoranordnung für ein Fahrzeug zur Verfügung, welche mindestens eine Sensoreinheit und eine Auswerte- und Steuereinheit umfasst. Die Auswerte- und Steuereinheit überträgt über eine Kommunikationsverbindung ein Synchronisationssignal an die mindestens eine Sensoreinheit, und die mindestens eine Sensoreinheit überträgt ein die Messgröße repräsentierendes Sensorsignal über die Kommunikationsverbindung an die Auswerte- und Steuereinheit. Erfindungsgemäß ermittelt die Auswerte- und Steuereinheit eine aktuelle Signalgüte des empfangenen Sensorsignals und überträgt eine Information über die ermittelte aktuelle Signalgüte an die mindestens eine Sensoreinheit, wobei die mindestens eine Sensoreinheit eine Modulationsamplitude zur Übertragung des Sensorsignals in Abhängigkeit von der ermittelten aktuellen Signalgüte einstellt.

Des Weiteren stellen Ausführungsformen der vorliegenden Erfindung ein Betriebsverfahren für eine Sensoranordnung in einem Fahrzeug mit mindestens einer Sensoreinheit und einer Auswerte- und Steuereinheit zur Verfügung. Hierbei wird ein Synchronisationssignal von der Auswerte- und Steuereinheit über eine Kommunikationsverbindung an die mindestens eine Sensoreinheit übertragen, und ein die Messgröße repräsentierendes Sensorsignal wird von der mindestens einen Sensoreinheit über die Kommunikationsverbindung an die Auswerte- und Steuereinheit übertragen. Erfindungsgemäß wird eine aktuelle Signalgüte des empfangenen Sensorsignals ermittelt und eine Information über die ermittelte aktuelle Signalgüte wird an die mindestens eine Sensoreinheit übertragen, wobei eine Modulationsamplitude zur Übertragung des Sensorsignals in Abhängigkeit von der ermittelten aktuellen Signalgüte vorgegeben wird.

Unter der Auswerte- und Steuereinheit kann vorliegend ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Unter einer Sensoreinheit wird vorliegend eine Baueinheit verstanden, welche mindestens ein Sensorelement umfasst, welches eine physikalische Größe bzw. eine Änderung einer physikalischen Größe direkt oder indirekt erfasst und vorzugsweise in ein elektrisches Sensorsignal umwandelt. Die ermittelten Sensorsignale werden von der in der jeweiligen Sensoreinheit ausgewertet und in Sensordaten umgewandelt, welche eine aus einer mit der jeweiligen Sensoreinheit erfassten physikalischen Größe ermittelte physikalische Größe mit der dazugehörigen Einheit umfasst. Hierbei wird beispielsweise von einem Sensorelement die Wegänderung in einem bestimmten Zeitfenster ermittelt und daraus von der Auswerte- und Steuereinheit eine Geschwindigkeit und/oder Beschleunigung berechnet. Weitere berechenbare physikalische Größen sind Masse, Umdrehungszahl, Kraft, Druck, Energie und/oder andere denkbare Größen, wie beispielsweise eine Eintrittswahrscheinlichkeiten für ein bestimmtes Ereignis. Die Ermittlung der Sensorsignale kann statisch und/oder dynamisch erfolgen. Des Weiteren kann die Ermittlung der Sensorsignale fortlaufend oder einmalig durchgeführt werden.

Durch die in den abhängigen Ansprüchen aufgeführten Maßnahmen und Weiterbildungen sind vorteilhafte Verbesserungen der im unabhängigen Patentanspruch 1 angegebenen Sensoranordnung für ein Fahrzeug und des im unabhängigen Patentanspruch 7 angegebenen Betriebsverfahrens für eine Sensoranordnung in einem Fahrzeug möglich.

Besonders vorteilhaft ist, dass die Auswerte- und Steuereinheit mit der Information über die ermittelte aktuelle Signalgüte das Synchronisationssignal moduliert und an die mindestens eine Sensoreinheit überträgt. Dies ermöglicht eine einfache Implementierung der vorliegenden Erfindung, da ein ohnehin verwendetes Synchronisationssignal zusätzlich zur Übertragung von Informationen zur aktuellen Signalgüte eingesetzt wird.

In vorteilhafter Ausgestaltung der erfindungsgemäßen Sensoranordnung ermittelt die Auswerte- und Steuereinheit aus der ermittelten aktuellen Signalgüte und einer vorgegebenen Signalgüte die einzustellende Modulationsamplitude als Information über die ermittelte aktuelle Signalgüte und überträgt diese an die mindestens eine Sensoranordnung, welche die empfangene Information über die ermittelte aktuelle Signalgüte direkt zur Einstellung der Modulationsamplitude verwendet. Das bedeutet, dass die Auswerte- und Steuereinheit den Wert der einzustellenden Modulationsamplitude ermittelt und an die mindestens eine Sensoreinheit überträgt.

In weiterer vorteilhafter Ausgestaltung der erfindungsgemäßen Sensoranordnung bestimmt die Auswerte- und Steuereinheit aus der ermittelten aktuellen Signalgüte und einer vorgegebenen Signalgüte ein Fehlersignal als Information über die ermittelte aktuelle Signalgüte und überträgt das Fehlersignal an die mindestens eine Sensoreinheit. Die mindestens eine Sensoreinheit bestimmt dann aus dem empfangenen Fehlersignal die Modulationsamplitude für das Sensorsignal und stellt die Modulationsamplitude ein.

In weiterer vorteilhafter Ausgestaltung der erfindungsgemäßen Sensoranordnung moduliert die mindestens eine Sensoreinheit zur Übertragung der erfassten Messgröße die Stromaufnahme des Sensorsignals, wodurch eine einfache Übertragung der Messgröße an die Auswerte- und Steuereinheit ermöglicht wird.

In vorteilhafter Ausgestaltung des erfindungsgemäßen Betriebsverfahrens umfasst die Information über die ermittelte aktuelle Signalgüte Informationen über eine Fehlerrate und/oder einen Störabstand.

In weiterer vorteilhafter Ausgestaltung des erfindungsgemäßen Betriebsverfahrens wird das Synchronisationssignal mit der Information über die ermittelte aktuelle Signalgüte moduliert und an die mindestens eine Sensoreinheit übertragen.

In weiterer vorteilhafter Ausgestaltung des erfindungsgemäßen Betriebsverfahrens wird die Modulationsamplitude zur Übertragung des Sensorsignals von der

Auswerte- und Steuereinheit oder von der mindestens einen Sensoreinheit ermittelt.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

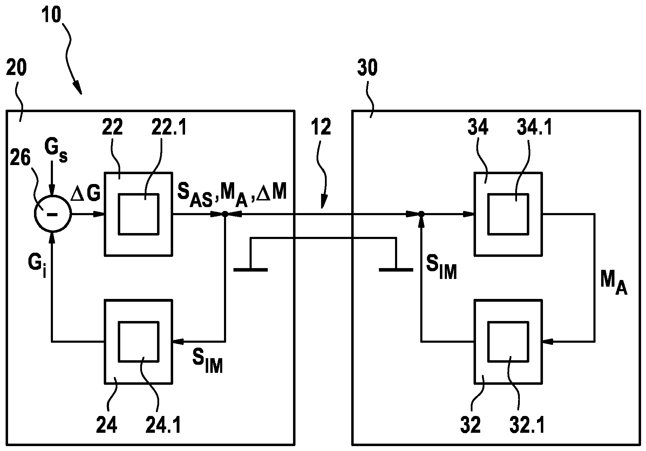

Die einzige Figur zeigt ein schematisches Blockschaltbild eines Ausführungsbeispiels einer erfindungsgemäßen Sensoranordnung.

### Ausführungsformen der Erfindung

Wie aus der einzigen Figur ersichtlich ist, umfasst das dargestellte Ausführungsbeispiel einer erfindungsgemäßen Sensoranordnung 10 für ein Fahrzeug eine Auswerte- und Steuereinheit 20 mit einer ersten Sendereinheit 22 und einer ersten Empfängereinheit 24 und eine Sensoreinheit 30 mit einer zweiten Sendereinheit 32 und einer zweiten Empfängereinheit 34. Die Auswerte- und Steuereinheit 20 kommuniziert über eine Kommunikationsverbindung 12 mit der Sensoreinheit 30. Die Auswerte- und Steuereinheit 20 überträgt über die Kommunikationsverbindung 12 ein Synchronisationssignal S_{AS} an die mindestens eine Sensoreinheit 30. In Reaktion auf das Synchronisationssignal S_{AS} überträgt die mindestens eine Sensoreinheit 30 ein die Messgröße repräsentierendes Sensorsignal S_{IM} über die Kommunikationsverbindung 12 an die Auswerte- und Steuereinheit 20.

Erfindungsgemäß ermittelt die Auswerte- und Steuereinheit 20 eine aktuelle Signalgüte Gᵢ des empfangenen Sensorsignals S_{IM} und überträgt eine Information M_{A}, ΔM über die ermittelte aktuelle Signalgüte Gᵢ an die Sensoreinheit 30. In Abhängigkeit von der ermittelten aktuellen Signalgüte Gᵢ stellt die Sensoreinheit 30 eine Modulationsamplitude M_{A} zur Übertragung des Sensorsignals S_{IM} ein. Die Information M_{A}, ΔM über die ermittelte aktuelle Signalgüte Gᵢ umfasst beispielsweise Informationen über eine Fehlerrate und/oder einen Störabstand.

Durch die variable einstellbare Modulationsamplitude M_{A} des zu übertragenden Sensorsignals S_{IM} kann eine von der Sensoreinheit 30 abgestrahlte Störleistung im Frequenzband der Kommunikation reduziert werden, da berücksichtigt wird, ob für eine sichere Kommunikation auch eine kleiner Modulationsamplitude M_{A} ausgereicht hätte, beispielsweise bei einem sehr großen Störabstand.

Bei den bekannten Kommunikationsstandards, wie beispielsweise PSI5 v1.3 und v2.0 kann die Auswerte- und Steuereinheit 20 über die Modulation des Synchronisationssignal S_{AS}, beispielsweise durch eine On-/Off-Modulation, eine Pulsweitenmodulation usw., auch eine Kommunikation von der Auswerte- und Steuereinheit 20 in Richtung Sensoreinheit 30 aufbauen. Über diesen Rückkanal kann dann die Sensoreinheit 30 über die aktuelle Signalgüte der Kommunikation informiert werden. Damit kann die Sensoreinheit 30, falls eine mehr als ausreichende Signalgüte vorliegt, die Modulationsamplitude M_{A} reduzieren, um seine Störabstrahlung auf das minimal notwendige Maß zu reduzieren. Dadurch kann auch der Stromverbrauch in der Auswerte- und Steuereinheit 20 minimiert werden.

Das bedeutet, dass die Auswerte- und Steuereinheit 20 das Synchronisationssignal S_{AS} mit der Information M_{A}, ΔM über die ermittelte aktuelle Signalgüte Gᵢ über einen Modulator 22.1 moduliert, der in der ersten Sendereinheit 22 angeordnet ist, welche das mit der Information M_{A}, ΔM über die ermittelte aktuelle Signalgüte Gᵢ modulierte Synchronisationssignal S_{AS} an die Sensoreinheit 30 überträgt. Die Sensoreinheit 30 empfängt das mit der Information M_{A}, ΔM über die ermittelte aktuelle Signalgüte Gᵢ modulierte Synchronisationssignal S_{AS} mit der zweiten Empfängereinheit 34. Ein in der zweiten Empfängereinheit 34 angeordneter Demodulator 34.1 demoduliert das empfange Synchronisationssignal S_{AS} und stellt die ermittelte Information über die ermittelte aktuelle Signalgüte Gᵢ zur Auswertung zur Verfügung.

Bei einer ersten möglichen Ausführungsform bestimmt die Auswerte- und Steuereinheit 20 aus der ermittelten aktuellen Signalgüte Gᵢ und einer vorgegebenen Sollsignalgüte Gₛ ein Fehlersignal ΔG und überträgt eine korrespondierende Pegelabweichung ΔM als Information über die ermittelte aktuelle Signalgüte Gᵢ an die Sensoreinheit 30. Die Sensoreinheit 30 wertet die empfangene Pegelabweichung ΔM aus und ermittelt die einzustellende Modulationsamplitude M_{A}. Zur

Übertragung der Messwerte stellt die Sensoreinheit 30 dann die ermittelte Modulationsamplitude M_{A} des Sensorsignals S_{IM} entsprechend ein. Zudem moduliert die Sensoreinheit 30 zur Übertragung der erfassten Messgröße die Stromaufnahme des Sensorsignals S_{IM} mit einem in der zweiten Sendereinheit 32 angeordneten Modulator 32.1.

Bei einer zweiten möglichen Ausführungsform bestimmt die Auswerte- und Steuereinheit 20 aus der ermittelten aktuellen Signalgüte Gᵢ und einer vorgegebenen Sollsignalgüte Gₛ ein Fehlersignal ΔG. Aus dem bestimmten Fehlersignal ΔG berechnet die Auswerte- und Steuereinheit 20 einen korrespondierenden Wert für die einzustellende Modulationsamplitude M_{A} und überträgt diesen als Information über die ermittelte aktuelle Signalgüte Gᵢ an die Sensoreinheit 30. Die Sensoreinheit 30 empfängt den Wert für die einzustellende Modulationsamplitude M_{A} und stellt die Modulationsamplitude M_{A} des Sensorsignals S_{IM} entsprechend ein. Des Weiteren moduliert die Sensoreinheit 30 zur Übertragung der erfassten Messgröße die Stromaufnahme des Sensorsignals S_{IM} mit einem in der zweiten Sendereinheit 32 angeordneten Modulator 32.1.

Ausführungsformen des erfindungsgemäßen Betriebsverfahrens für eine Sensoranordnung in einem Fahrzeug mit mindestens einer Sensoreinheit 30 und einer Auswerte- und Steuereinheit 20 übertragen ein Synchronisationssignal S_{AS} von der Auswerte- und Steuereinheit 20 über die Kommunikationsverbindung 12 an die mindestens eine Sensoreinheit 30. Zudem wird ein die Messgröße repräsentierendes Sensorsignal S_{IM} von der mindestens einen Sensoreinheit 30 über die Kommunikationsverbindung 12 an die Auswerte- und Steuereinheit 20 übertragen. Erfindungsgemäß wird eine aktuelle Signalgüte Gᵢ des empfangenen Sensorsignals S_{IM} ermittelt und eine Information über die ermittelte aktuelle Signalgüte Gᵢ an die mindestens eine Sensoreinheit 30 übertragen, wobei eine Modulationsamplitude M_{A} zur Übertragung des Sensorsignals S_{IM} in Abhängigkeit von der ermittelten aktuellen Signalgüte Gᵢ vorgegeben wird. Vorzugsweise wird das Synchronisationssignal S_{AS} mit der Information über die ermittelte aktuelle Signalgüte Gᵢ moduliert und an die mindestens eine Sensoreinheit 30 übertragen. Des Weiteren ermittelt die Auswerte- und Steuereinheit 20 oder die mindestens eine Sensoreinheit 30 die Modulationsamplitude M_{A} zur Übertragung des Sensorsignals S_{IM}.

Ausführungsformen der vorliegenden Erfindung stellten eine Sensoranordnung zur Verfügung, welche in vorteilhafter Weise als Regelkreis implementiert ist. Hierbei ist die Stellgröße die Modulationsamplitude des Sensorsignals. Die Sollgröße ist eine ausreichende Kommunikationsgüte, wie beispielsweise eine Fehlerrate. Wenn die Ist-Fehlerrate geringer ist als die vorgegebene Sollgröße, dann erhält die Sendereinheit ein Signal zur Verringerung der Modulationsamplitude. Wenn die Ist-Fehlerrate höher als die Sollgröße ist, dann erhält die Sensoreinheit ein Signal zur Erhöhung der Modulationsamplitude. Der entsprechende Regler ist vorzugsweise als PID-Regler ausgeführt und in der ersten Sendereinheit der Auswerte- und Steuereinheit oder in der zweiten Empfängereinheit der Sensoreinheit angeordnet. Bei einer Anordnung in der ersten Sendereinheit wird zu verwendende Modulationsamplitude direkt über Modulation des Synchronsignals übertragen. Bei einer Anordnung in der zweiten Empfängereinheit wird über die Modulation des Synchronsignals die Regelabweichung übertragen, die dann von der Sensoreinheit ausgewertet und verarbeitet wird.

## Patentansprüche

1. Sensoranordnung für ein Fahrzeug mit mindestens einer Sensoreinheit (30) und einer Auswerte- und Steuereinheit (20), wobei die Auswerte- und Steuereinheit (20) dazu ausgebildet ist, über eine Kommunikationsverbindung (12) ein Synchronisationssignal (S_{AS}) an die mindestens eine Sensoreinheit (30) zu übertragen, und wobei die mindestens eine Sensoreinheit (30) dazu ausgebildet ist, in Reaktion auf das Synchronisationssignal (S_{AS}) ein die Messgröße repräsentierendes Sensorsignal (S_{IM}) über die Kommunikationsverbindung (12) an die Auswerte- und Steuereinheit (20) zu übertragen, **dadurch gekennzeichnet, dass** die Auswerte- und Steuereinheit (20) derart gestaltet ist, dass die Auswerte- und Steuereinheit (20) eine aktuelle Signalgüte (Gᵢ) des empfangenen Sensorsignals (S_{IM}) ermittelt und eine Information (M_{A}, ΔM) über die ermittelte aktuelle Signalgüte (Gᵢ) an die mindestens eine Sensoreinheit (30) überträgt, wobei die mindestens eine Sensoreinheit (30) derart gestaltet ist, dass die Sensoreinheit (30) eine Modulationsamplitude (M_{A}) zur Übertragung des Sensorsignals (S_{IM}) in Abhängigkeit von der ermittelten aktuellen Signalgüte (Gᵢ) einstellt.

2. Sensoranordnung nach Anspruch 1, **dadurch gekennzeichnet, dass** die Auswerte- und Steuereinheit (20) mit der Information (M_{A}, ΔM) über die ermittelte aktuelle Signalgüte (Gᵢ) das Synchronisationssignal (S_{AS}) moduliert und an die mindestens eine Sensoreinheit (30) überträgt.

3. Sensoranordnung nach Anspruch 1 oder 2, **dadurch gekennzeichnet, dass** die Auswerte- und Steuereinheit (20) aus der ermittelten aktuellen Signalgüte (Gᵢ) und einer vorgegebenen Signalgüte (Gₛ) die einzustellende Modulationsamplitude (M_{A}) ermittelt und als Information (M_{A}, ΔM) über die ermittelte aktuelle Signalgüte (Gᵢ) an die mindestens eine Sensoreinheit (30) überträgt, welche die empfangene Information (M_{A}) über die ermittelte aktuelle Signalgüte (Gᵢ) direkt zur Einstellung der Modulationsamplitude (M_{A}) verwendet.

4. Sensoranordnung nach Anspruch 1 oder 2, **dadurch gekennzeichnet, dass** die Auswerte- und Steuereinheit (20) aus der ermittelten aktuellen Signalgüte (Gᵢ) und einer vorgegebenen Signalgüte (Gₛ) ein Fehlersignal (ΔG) als Information (M_{A}, ΔM) über die ermittelte aktuelle Signalgüte (Gᵢ) bestimmt und an die mindestens eine Sensoreinheit (30) überträgt.

5. Sensoranordnung nach Anspruch 4, **dadurch gekennzeichnet, dass** die mindestens eine Sensoreinheit (30) aus dem Fehlersignal (ΔG) die einzustellende Modulationsamplitude (M_{A}) für das Sensorsignal (S_{IM}) bestimmt und einstellt.

6. Sensoranordnung nach einem der Ansprüche 1 bis 5, **dadurch gekennzeichnet, dass** die mindestens eine Sensoreinheit (30) zur Übertragung der erfassten Messgröße die Stromaufnahme des Sensorsignals (S_{IM}) moduliert.

7. Betriebsverfahren für eine Sensoranordnung in einem Fahrzeug mit mindestens einer Sensoreinheit (30) und einer Auswerte- und Steuereinheit (20), wobei ein Synchronisationssignal (S_{AS}) von der Auswerte- und Steuereinheit (20) über eine Kommunikationsverbindung (12) an die mindestens eine Sensoreinheit (30) übertragen wird, und wobei ein die Messgröße repräsentierendes Sensorsignal (S_{IM}) von der mindestens einen Sensoreinheit (30) über die Kommunikationsverbindung (12) an die Auswerte- und Steuereinheit (20) in Reaktion auf das Synchronisationssignal (S_{AS}) übertragen wird,
**dadurch gekennzeichnet, dass** eine aktuelle Signalgüte (Gᵢ) des empfangenen Sensorsignals (S_{IM}) ermittelt und eine Information (M_{A}, ΔM) über die ermittelte aktuelle Signalgüte (Gᵢ) an die mindestens eine Sensoreinheit (30) übertragen wird, wobei eine Modulationsamplitude (M_{A}) zur Übertragung des Sensorsignals (S_{IM}) in Abhängigkeit von der ermittelten aktuellen Signalgüte (Gᵢ) vorgegeben wird.

8. Betriebsverfahren nach Anspruch 7, **dadurch gekennzeichnet, dass** die Information (M_{A}, ΔM) über die ermittelte aktuelle Signalgüte (Gᵢ) Informationen über eine Fehlerrate und/oder einen Störabstand umfasst.

9. Betriebsverfahren nach Anspruch 7 oder 8, **dadurch gekennzeichnet, dass** das Synchronisationssignal (S_{AS}) mit der Information (M_{A}, ΔM) über die ermittelte aktuelle Signalgüte (Gᵢ) moduliert und an die mindestens eine Sensoreinheit (30) übertragen wird.

10. Betriebsverfahren nach einem der Ansprüche 7 bis 9, **dadurch gekennzeichnet, dass** die Auswerte- und Steuereinheit (20) oder die mindestens eine Sensoreinheit (30) die Modulationsamplitude (M_{A}) zur Übertragung des Sensorsignals (S_{IM}) ermittelt.

## Claims

1. Sensor arrangement for a vehicle having at least one sensor unit (30) and an evaluation and control unit (20), wherein the evaluation and control unit (20) is configured to use a communication link (12) to transmit a synchronization signal (S_{AS}) to the at least one sensor unit (30), and wherein the at least one sensor unit (30) is configured to react to the synchronization signal (S_{AS}) by transmitting a sensor signal (S_{IM}) representing the measured variable to the evaluation and control unit (20) via the communication link (12), **characterized in that** the evaluation and control unit (20) is in a form such that the evaluation and control unit (20) ascertains a present signal quality (Gᵢ) of the received sensor signal (S_{IM}) and transmits a piece of information (M_{A}, ΔM) about the ascertained present signal quality (Gi) of the received sensor signal (S_{IM}) to the at least one sensor unit (30), wherein the at least one sensor unit (30) is in a form such that the sensor unit (30) sets a modulation amplitude (M_{A}) for transmitting the sensor signal (S_{IM}) on the basis of the ascertained present signal quality (Gᵢ).

2. Sensor arrangement according to Claim 1, **characterized in that** the evaluation and control unit (20) modulates the synchronization signal (S_{AS}) with the information (M_{A}, ΔM) about the ascertained present signal quality (Gᵢ) and transmits said synchronization signal to the at least one sensor unit (30).

3. Sensor arrangement according to Claim 1 or 2, **characterized in that** the evaluation and control unit (20) ascertains the modulation amplitude (M_{A}) to be set from the ascertained present signal quality (Gᵢ) and a prescribed signal quality (G_{S}) and transmits said modulation amplitude as information (M_{A}, ΔM) about the ascertained present signal quality (Gᵢ) to the at least one sensor unit (30), which uses the received information (M_{A}) about the ascertained present signal quality (Gᵢ) directly to set the modulation amplitude (M_{A}).

4. Sensor arrangement according to Claim 1 or 2, **characterized in that** the evaluation and control unit (20) determines an error signal (ΔG) from the ascertained present signal quality (Gᵢ) and a prescribed signal quality (Gₛ) as information (M_{A}, ΔM) about the ascertained present signal quality (Gᵢ) and transmits said error signal to the at least one sensor unit (30).

5. Sensor arrangement according to Claim 4, **characterized in that** the at least one sensor unit (30) determines the modulation amplitude (M_{A}) to be set for the sensor signal (S_{IM}) from the error signal (ΔG) and sets said modulation amplitude.

6. Sensor arrangement according to one of Claims 1 to 5, **characterized in that** the at least one sensor unit (30) transmits the captured measured variable by modulating the current draw of the sensor signal (S_{IM}).

7. Method of operation for a sensor arrangement in a vehicle having at least one sensor unit (30) and an evaluation and control unit (20), wherein a synchronization signal (S_{AS}) is transmitted from the evaluation and control unit (20) to the at least one sensor unit (30) via a communication link (12), and wherein a sensor signal (S_{IM}) representing the measured variable is transmitted from the at least one sensor unit (30) to the evaluation and control unit (20) via the communication link (12) in reaction to the synchronization signal (S_{AS}),
**characterized in that** a present signal quality (Gᵢ) of the received sensor signal (S_{IM}) is ascertained and a piece of information (M_{A}, ΔM) about the ascertained present signal quality (Gᵢ) is transmitted to the at least one sensor unit (30), wherein a modulation amplitude (M_{A}) for transmitting the sensor signal (S_{IM}) is prescribed on the basis of the ascertained present signal quality (Gᵢ).

8. Method of operation according to Claim 7, **characterized in that** the information (M_{A}, ΔM) about the ascertained present signal quality (Gᵢ) comprises information about an error rate and/or a signal-to-noise ratio.

9. Method of operation according to Claim 7 or 8, **characterized in that** the synchronization signal (S_{AS}) is modulated with the information (M_{A}, ΔM) about the ascertained present signal quality (Gᵢ) and is transmitted to the at least one sensor unit (30).

10. Method of operation according to one of Claims 7 to 9, **characterized in that** evaluation and control unit (20) or the at least one sensor unit (30) ascertains the modulation amplitude (M_{A}) for transmitting the sensor signal (S_{IM}).

## Revendications

1. Système de capteur destiné à un véhicule, comportant au moins une unité de détection (30) et une unité d'évaluation et de commande (20), dans lequel l'unité d'évaluation et de commande (20) est conçue pour transmettre un signal de synchronisation (S_{AS}) par l'intermédiaire d'une liaison de communication (12) à l'au moins une unité de détection (30),
et dans lequel l'au moins une unité de détection (30) est conçue pour transmettre à l'unité d'évaluation et de commande (20), en réaction au signal de synchronisation (S_{AS}), un signal de capteur (S_{IM}) représentant la grandeur de mesure par l'intermédiaire de la liaison de communication (12),
**caractérisé en ce que** l'unité d'évaluation et de commande (20) est conçue de manière à ce que l'unité d'évaluation et de commande (20) détermine une qualité de signal actuelle (Gᵢ) du signal de capteur reçu (S_{IM}) et transmet à l'au moins une unité de détection (30) une information (M_{A}, ΔM) concernant la qualité de signal actuelle déterminée (Gᵢ), dans lequel l'au moins une unité de détection (30) est conçue de manière à ce que l'unité de détection (30) règle une amplitude de modulation (M_{A}) en fonction de la qualité de signal actuelle déterminée (Gᵢ) pour transmettre le signal de capteur (S_{IM}).

2. Système de capteur selon la revendication 1, **caractérisé en ce que** l'unité d'évaluation et de commande (20) module le signal de synchronisation (S_{AS}) avec l'information (M_{A}, ΔM) concernant la qualité de signal actuelle déterminée (Gᵢ) et le transmet à l'au moins une unité de détection (30).

3. Système de capteur selon la revendication 1 ou 2, **caractérisé en ce que** l'unité d'évaluation et de commande (20) détermine l'amplitude de modulation devant être réglée (M_{A}) à partir de la qualité de signal actuelle déterminée (Gᵢ) et d'une qualité de signal prédéterminée (Gₛ) et la transmet en tant qu'information (M_{A}, ΔM) concernant la qualité de signal actuelle déterminée (Gᵢ) à l'au moins une unité de détection (30), qui utilise directement l'information reçue (M_{A}) concernant la qualité de signal actuelle déterminée (Gᵢ) pour régler l'amplitude de modulation (M_{A}).

4. Système de capteur selon la revendication 1 ou 2, **caractérisé en ce que** l'unité d'évaluation et de commande (20) détermine à partir de la qualité de signal actuelle déterminée (Gᵢ) et d'une qualité de signal prédéterminée (Gₛ) un signal d'erreur (ΔG) en tant qu'information (M_{A}, ΔM) concernant la qualité de signal actuelle déterminée (Gᵢ) et le transmet à l'au moins une unité de détection (30).

5. Système de capteur selon la revendication 4, **caractérisé en ce que** l'au moins une unité de détection (30) détermine et règle à partir du signal d'erreur (ΔG) l'amplitude de modulation devant être réglée (M_{A}) pour le signal de capteur (S_{IM}).

6. Système de capteur selon l'une quelconque des revendications 1 à 5, **caractérisé en ce que** l'au moins une unité de détection (30) module la consommation de courant du signal de capteur (S_{IM}) pour transmettre la grandeur de mesure détectée.

7. Procédé de mise en fonctionnement destiné à un système de capteur dans un véhicule, comportant au moins une unité de détection (30) et une unité d'évaluation et de commande (20), dans lequel un signal de synchronisation (S_{AS}) est transmis à l'au moins une unité de détection (30) par l'unité d'évaluation et de commande (20) par l'intermédiaire d'une liaison de communication (12), et dans lequel un signal de capteur représentant la grandeur de mesure (S_{IM}) est transmis à l'unité d'évaluation et de commande (20) par l'au moins une unité de détection (30) par l'intermédiaire de la liaison de communication (12) en réaction au signal de synchronisation (S_{AS}),
**caractérisé en ce qu'**une qualité de signal actuelle (Gᵢ) du signal de capteur reçu (S_{IM}) est déterminée et **en ce qu'**une information (M_{A}, ΔM) concernant la qualité de signal actuelle déterminée (Gᵢ) est transmise à l'au moins une unité de détection (30), dans lequel une amplitude de modulation (M_{A}) est prédéterminée en fonction de la qualité de signal actuelle déterminée (Gᵢ) pour transmettre le signal de capteur (S_{IM}).

8. Procédé de mise en fonctionnement selon la revendication 7, **caractérisé en ce que** l'information (M_{A}, ΔM) concernant la qualité de signal actuelle déterminée (Gᵢ) comprend des informations concernant un taux d'erreur et/ou un rapport signal à bruit.

9. Procédé de mise en fonctionnement selon la revendication 7 ou 8, **caractérisé en ce que** le signal de synchronisation (S_{AS}) est modulé avec l'information (M_{A}, ΔM) concernant la qualité de signal actuelle déterminée (Gᵢ) et le transmet à l'au moins une unité de détection (30).

10. Procédé de mise en fonctionnement selon l'une quelconque des revendications 7 à 9, **caractérisé en ce que** l'unité d'évaluation et de commande (20) ou l'au moins une unité de détection (30) détermine l'amplitude de modulation (M_{A}) pour transmettre le signal de capteur (S_{IM}).
